# EUROPEAN PATENT APPLICATION

(11) **EP 4 600 782 A1**
(43) Date of publication of application: **13.08.2025**
(21) Application number: 23886014.2
(22) Date of filing: 20.09.2023
(51) Int. Cl.: G06F 1/3234, G06F 1/3287, G06F 1/3296

(54) **ELECTRONIC DEVICE FOR PROVIDING POWER TO DISPLAY**

(30) Priority: 01.11.2022 KR 20220143489; 08.02.2023 KR 20230017076
(71) Applicant: Samsung Electronics Co., Ltd., Suwon-si, Gyeonggi-do 16677 (KR)
(72) Inventor: PARK, Hyunjun, Suwon-si, Gyeonggi-do 16677 (KR); LEE, Gyeongsun, Suwon-si, Gyeonggi-do 16677 (KR)
(74) Representative: Gulde & Partner
(86) International application number: PCT/KR2023/014325
(87) International publication number: WO 2024/096317

(57) **Abstract**

This electronic device may comprise a processor, may comprise a display including: a display panel; a display driving circuit which includes at least one circuit configured to process images acquired from the processor in order to perform display on the display panel, a first pad connected to an input node of the at least one circuit, and a second pad connected to the input node; and a capacitor connected to the input node through the first pad, and may comprise a power management integrated circuit (PMIC) including: a third pad; a fourth pad; and a power supply circuit connected to each of the third pad and the fourth pad.

## Description

### [Technical Field]

The following descriptions relate to an electronic device for providing power to a display.

### [Background Art]

An electronic device may include a display panel. The electronic device may include display driver circuitry operably coupled to the display panel. For example, the display driver circuitry may display an image obtained from a processor of the electronic device on the display panel.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is provided. The electronic device may comprise a processor. The electronic device may comprise a display including a display panel and display driver circuitry, the display driver circuitry including at least one circuit configured to process an image obtained from the processor for displaying on the display panel, a first pad connected to an input node of the at least one circuit, and a second pad connected to the input node, wherein the display further includes a capacitor connected to the input node via the first pad. The electronic device may comprise power management integrated circuitry (PMIC) including a third pad, a fourth pad, and a power supply circuit respectively connected to the third pad and the fourth pad. The PMIC may be configured to provide a first direct current (DC) signal to the at least one circuit via a first path between the first pad and the third pad, using the power supply circuit. The PMIC may be configured to identify a voltage value of the first DC signal at the input node via a second path between the second pad and the fourth pad, using the power supply circuit. The PMIC may be configured to provide a second DC signal obtained based on the voltage value to the at least one circuit via the first path, using the power supply circuit.

### [Description of the Drawings]

FIG. 1 illustrates an example of providing power from power management integrated circuitry (PMIC) to display driver circuitry.
FIG. 2 is a simplified block diagram of an exemplary electronic device including PMIC that includes a first power supply circuit providing a DC signal for at least one first circuit in display driver circuitry and a second power supply circuit providing another DC signal for each of a second circuit and a third circuit within the display driver circuitry.
FIG. 3 is a simplified block diagram of an exemplary electronic device including PMIC that includes a first power supply circuit providing a DC signal for each of at least one first circuit and a second circuit in display driver circuitry and a second power supply circuit providing another DC signal for a third circuit within the display driver circuitry.
FIGS. 4 and 5 are simplified block diagrams of an exemplary electronic device including PMIC adaptively providing a DC signal or another DC signal for at least one first circuit and a second circuit within display driver circuitry according to a type of command provided from a processor to the display driver circuitry.
FIG. 6 illustrates a chart indicating an exemplary method of identifying a command provided from a processor to display driver circuitry.
FIG. 7 illustrates a chart indicating power consumed by providing a DC signal using a first power supply circuit within PMIC.
FIG. 8 is a block diagram of an electronic device in a network environment, according to various embodiments.
FIG. 9 is a block diagram of a display module according to various embodiments.

### [Mode for Invention]

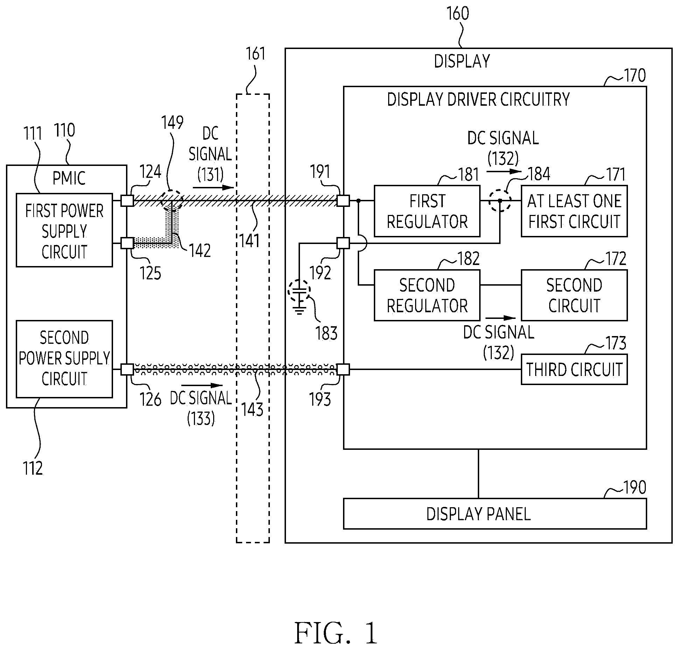

FIG. 1 illustrates an example of providing power from power management integrated circuitry (PMIC) to display driver circuitry.

Referring to FIG. 1, PMIC 110 may be used to provide a display 160 with power obtained from a battery (e.g., a rechargeable battery) directly or indirectly connected to the PMIC 110. For example, the PMIC 110 may include a first power supply circuit 111 and a second power supply circuit 112.

The display 160 may be used to display an image based on the power obtained from the PMIC 110. For example, the display 160 may include display driver circuitry 170 and a display panel 190. For example, the display driver circuitry 170 may be used to display an image obtained from a processor (not illustrated in FIG. 1) on the display panel 190. For example, the display driver circuit 170 may include at least one first circuit 171 configured to process the image, a second circuit 172 configured to at least temporarily store the image, and a third circuit 173 configured to provide power to pads (e.g., a first pad 191, a second pad 192, and a third pad 193) in the display driver circuit 170. For example, the at least one first circuit 171 may include one or more digital logic circuits for processing the image. However, it is not limited thereto.

For example, the display driver circuitry 170 may include a first regulator 181 for changing a voltage value of a DC signal provided from the PMIC 110 to a voltage value for at least one first circuit 171. For example, the display driver circuitry 170 may include a second regulator 182 for changing a voltage value of the DC signal provided from the PMIC 110 to a voltage value for the second circuit 172.

For example, the first power supply circuit 111 may provide a DC signal 131 having a first voltage value (e.g., about 1.8 voltage (V)) to the first regulator 181 via a first path 141 between a first pad 191 and a fourth pad 124. For example, the DC signal 131 may be obtained in the first power supply circuit 111 based on a voltage value obtained via a second path 142 between a node 149 and a fifth pad 125, and may be provided from the first power supply circuit 111 to the first regulator 181 via the first path 141. For example, the DC signal 131 input to the first regulator 181 may be converted, changed, or adjusted into a DC signal 132 having a second voltage value (e.g., about 1.0 V) lower than the first voltage value. For example, the DC signal 132 output from the first regulator 181 may be provided to at least one first circuit 171 via an input node 184 of the at least one first circuit 171 connected to a second pad 192 connected to a capacitor 183. As a non-limiting example, a DC signal 132, which is adjusted (or fine-tuned) to have a voltage value suitable for the at least one first circuit 171 via the capacitor 183 at the input node 184, may be provided to the at least one first circuit 171. For example, the at least one first circuit 171 may process the image based on the voltage value.

For example, the first power supply circuit 111 may provide the DC signal 131 having the first voltage value to the second regulator 182 via the first path 141. For example, the DC signal 131 input to the second regulator 182 may be converted, changed, or adjusted into the DC signal 132 having the second voltage value lower than the first voltage value. Although not illustrated in FIG. 1, the DC signal 132 output from the second regulator 182 may be provided to the second circuit 172 via an input node of the second circuit 172 connected to a pad connected to a capacitor. As a non-limiting example, the DC signal 132, which is adjusted to have a voltage value suitable for the second circuit 172 via the capacitor at the input node of the second circuit 172, may be provided to the second circuit 172. For example, the second circuit 172 may at least temporarily store the image based on the voltage value.

For example, the second power supply circuit 112 may provide a DC signal 133 having the first voltage value to the third circuit 173 via a third path 143 between a third pad 193 and a sixth pad 126. For example, the third circuit 173 may provide power to pads (e.g., the first pad 191, the second pad 192, and the third pad 193) within the display driver circuitry 170, based on the first voltage value.

For example, a connector 161 for the first path 141 and the third path 143 may be included in the electronic device illustrated in FIG. 1 for connection between the PMIC 110 and the display 160.

As described above, although each of the at least one first circuit 171 and the second circuit 172 operates based on a voltage value (e.g., about 1.0 V) provided via the DC signal 132, the first power supply circuit 121 obtains feedback (e.g., a voltage value at the node 149) via the second path 142 from the node 149 adjacent to the PMIC 110 among the PMIC 110 and the display 160 to the fifth pad 125, so the first power supply circuit 121 may provide the DC signal 131 having the first voltage value to the display driver circuitry 170 via the first path 141. For example, additional power consumption may occur on the first path 141 by a difference between the voltage value provided to the at least one first circuit 171 via the DC signal 132 and the first voltage value. In addition, since the DC signal 131 having the first voltage value is converted into the DC signal 132 having the second voltage value via the first regulator 181, additional power consumption may occur due to a conversion from the DC signal 131 to the DC signal 132 that is executed via each of the first regulator 181 and the second regulator 182 while providing power to each of the first circuit 171 and the second circuit 172 via the DC signal 131.

The electronic device exemplified below may include PMIC including a power supply circuit that provides a DC signal having the second voltage value to display driver circuitry, unlike the first power supply circuit 111. For example, the DC signal may be obtained within the power supply circuit based on a voltage value at a node identified via a path from the node within the display driver circuitry, and provided from the power supply circuit to the display driver circuitry. For example, since the DC signal has the second voltage value, the electronic device may reduce power consumed to change the first voltage value to the second voltage value. For example, since the DC signal provided from the power supply circuit to the display driver circuitry has the second voltage value lower than the first voltage value, the electronic device may reduce power that is consumed due to providing power from the PMIC for operating the display driver circuitry.

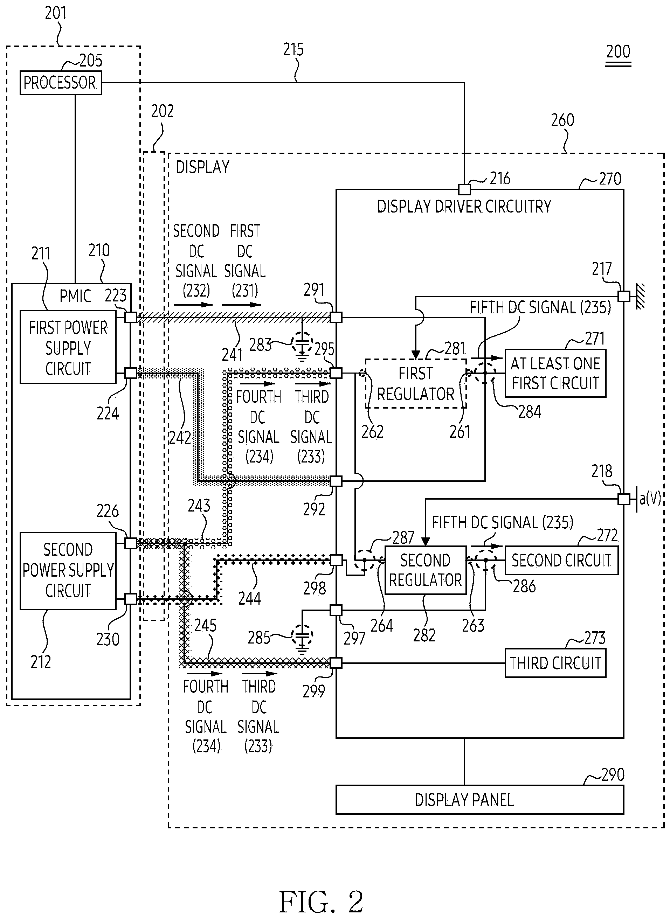

The electronic device may be exemplified through FIGS. 2 to 5.

FIG. 2 is a simplified block diagram of an exemplary electronic device including PMIC that includes a first power supply circuit providing a DC signal for at least one first circuit in display driver circuitry and a second power supply circuit providing another DC signal for each of a second circuit and a third circuit within the display driver circuitry.

Referring to FIG. 2, an electronic device 200 may include a processor 205, PMIC 210, and a display 260. As a non-limiting example, the processor 205 and the PMIC 210 may be attached to a printed circuit board (PCB) 201 (e.g., a main PCB), and the display 260 may be connected to the PMIC 210 via a connector 202.

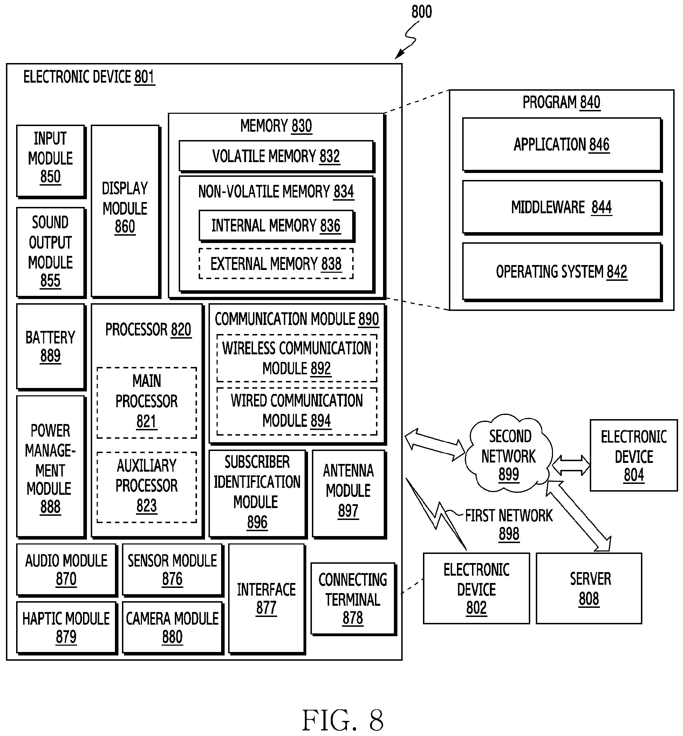

For example, the processor 205 may be used to obtain an image and provide the obtained image to the display driver circuitry 270. For example, the image may be provided from the processor 205 to the display driver circuitry 270 via an interface 215. As a non-limiting example, the interface 215 may be connected to a pad 216 within the display driver circuitry 270. As a non-limiting example, the interface 215 may include a high speed serial interface (HSSI), such as a mobile industry processor interface (MIPI). As a non-limiting example, the interface 215 may include an interface, such as a mobile display digital interface (MDDI), a compact display port (CDP), a serial peripheral interface (SPI), an inter integrated circuit (I2C), or an improved inter integrated circuit (I3C). For example, the processor 205 may include at least a portion of the processor 820 of FIG. 8.

For example, the PMIC 210 may be used to provide the display 260 with power obtained from a battery (e.g., a rechargeable battery) directly or indirectly connected to the PMIC 210.

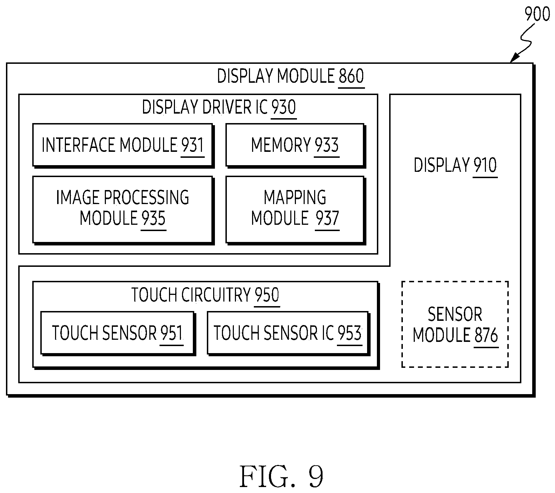

For example, the display 260 may be used to display an image based on the power obtained from the PMIC 210. For example, the display 260 may include display driver circuitry 270 and a display panel 290. For example, the display driver circuitry 270 may be used to display an image obtained from the processor 205 on the display panel 290. For example, the display driver circuitry 270 may include at least a portion of the DDI 930 of FIG. 9, and the display panel 290 may include at least a portion of the display 910 of FIG. 9.

For example, the display driver circuitry 270 may include at least one first circuit 271 configured to process the image, a second circuit 272 (e.g., a graphic random access memory (GRAM)) configured to at least temporarily store the image, and a third circuit 273 configured to provide power to pads (e.g., a plurality of pads including a first pad 291, a second pad 292, a fifth pad 295, a seventh pad 297, an eighth pad 298, and a ninth pad 299) within the display driver circuitry 270.

For example, the display driver circuitry 270 may include a first regulator 281 (e.g., a low dropout (LDO) regulator) and a second regulator 282 (e.g., a low dropout (LDO) regulator). However, it is not limited thereto. For example, the first regulator 281 may be excluded from the display driver circuitry 270.

For example, the display driver circuitry 270 may include the first pad 291 connected to an input node 284 of the at least one first circuit 271, and a second pad 292 connected to the input node 284. For example, the input node 284 may be connected to a capacitor 283 within the display 260 via the first pad 291. However, it is not limited thereto. For example, the input node 284 may be connected to the capacitor 283 via another pad distinct from the first pad 291. For example, the capacitor 283 may be located outside the display 260.

For example, the PMIC 210 may include a third pad 223, a fourth pad 224, and a first power supply circuit 211 respectively connected to the third pad 223 and the fourth pad 224.

For example, the PMIC 210 may provide a first DC signal 231 to the at least one first circuit 271 via a first path 241 between the first pad 291 and the third pad 223, using the first power supply circuit 211. For example, the PMIC 210 may identify a voltage value of the first DC signal 231 at the input node 284 via a second path 242 between the second pad 292 and the fourth pad 224, using the first power supply circuit 211. For example, the PMIC 210 may provide, to the at least one first circuit 271 via the first path 241, a second DC signal 232 obtained based on the voltage value of the first DC signal 231 at the input node 284, using the first power supply circuit 211. As a non-limiting example, a second DC signal 232, which is adjusted (or fine-tuned) to have a voltage value suitable for the at least one first circuit 271 via a capacitor 283 at the input node 284, may be provided to the at least one first circuit 271. For example, the at least one first circuit 271 may process the image based on the voltage value.

For example, unlike the second path 142 of FIG. 1, the second path 242 is used to measure a voltage value at the input node 284 located within the display driver circuitry 270, so a voltage value (e.g., about 1.0 V) of each of the first DC signal 231 and the second DC signal 232 may be lower than the first voltage value (e.g., about 1.8 V) of the DC signal 131 of FIG. 1. For example, since the voltage value of each of the first DC signal 231 and the second DC signal 232 is lower than the first voltage value of the DC signal 131, power consumed due to providing the first DC signal 231 and the second DC signal 232 via the first path 241 may be less than power consumed due to providing the DC signal 131 via the first path 141. For example, since the voltage value of each of the first DC signal 231 and the second DC signal 232 is lower than the first voltage value of the DC signal 131, the display driver circuitry 270 may be used to bypass using the first regulator 281 for processing the image by using the at least one first circuit 271, unlike the display driver circuitry 170 of FIG. 1. For example, the display driver circuitry 270 may reduce power consumption due to the use of the first regulator 281. For example, unlike the electronic device illustrated in FIG. 1, the electronic device 200 may reduce power consumption while displaying an image via the display 260, by including the second path 242 for measuring a voltage value at the input node 284 located within the display driver circuitry 270.

For example, the electronic device 200 may include a PCB 201 (or a flexible printed circuit board (FPCB)), and a connector 202 attached to the PCB 201 and including a pin connected to the first pad 291 for the first path 241 and another pin connected to the second pad 292 for the second path 242. For example, the connector 202 may further include a pin for a third path 243 and a pin for a fourth path 244 (and/or a pin for a fifth path 245). For example, the electronic device 200 may further include another FPCB for connection with the connector 202.

Although not illustrated in FIG. 2, the PCB 201 may include a plurality of signal lines comprising a first signal line between the first pad 291 and the pin and a second signal line between the second pad 292 and the another pin. For example, the first signal line may be electrically separated from signal lines different from the first signal line from among the plurality of signal lines, and the second signal line may be electrically separated from signal lines different from the second signal line from among the plurality of signal lines. For example, in order to reduce noise from being included in each of the first DC signal 231 and the second DC signal 232, each of the first signal line and the second signal line may be electrically separated from other signal lines from among the plurality of signal lines. For example, a second layer of the PCB, which is directly below a first layer of the PCB where the first signal line (and/or the second signal line) is located, and a third layer of the PCB, which is directly above the first layer, may be connected to ground. However, it is not limited thereto.

For example, the second regulator 282 within the display driver circuitry 270 may include a terminal 263 connected to an input node 286 of a second circuit 272. For example, the display driver circuitry 270 may include a fifth pad 295 connected to another terminal 264 of the second regulator 282. For example, the display driver circuitry 270 may include a seventh pad 297 connected to the input node 286. For example, the seventh pad 297 may be connected to a capacitor 285. For example, the display driver circuitry 270 may include an eighth pad 298 connected to the another terminal 264.

For example, the PMIC 210 may include a second power supply circuit 212, a sixth pad 226 connected to the second power supply circuit 212, and a tenth pad 230 connected to the second power supply circuit 212.

For example, the PMIC 210 may provide a third DC signal 233 to the second regulator 282 via a third path 243 between the fifth pad 295 and the sixth pad 226, using the second power supply circuit 212. For example, the PMIC 210 may identify a voltage value of the third DC signal 233 at a node 287 via a fourth path 244 between the eighth pad 298 and the tenth pad 230, using the second power supply circuit 212. For example, the PMIC 210 may provide a fourth DC signal 234 obtained based on the voltage value of the third DC signal 233 at the node 287 to the second regulator 282 via the third path 243, using the second power supply circuit 212. For example, the fourth DC signal 234 may be converted into a fifth DC signal 235 via the second regulator 282. For example, a voltage value (about 1.0 V) of the fifth DC signal 235 may be lower than a voltage value (e.g., about 1.8 V) of each of the third DC signal 233 and the fourth DC signal 234. For example, the fifth DC signal 235 may be provided to the second circuit 272 from the second regulator 282. As a non-limiting example, a fifth DC signal 235, which is adjusted (or fine-tuned) to have a voltage value suitable for the second circuit 272 via a capacitor 285 at the input node 286 of the second circuit 272, may be provided to the second circuit 272. For example, the second circuit 272 may at least temporarily store the image provided from the processor 205 via the interface 215 based on the voltage value.

For example, the voltage value of each of the third DC signal 233 and the fourth DC signal 234 may be higher than the voltage value of each of the first DC signal 231 and the second DC signal 232. For example, the voltage value of each of the third DC signal 233 and the fourth DC signal 234 may be higher than the voltage value of each of the first DC signal 231 and the second DC signal 232, but the electronic device 200 may provide power to the second circuit 272 using the third path 243 by using the second power supply circuit 212 in order to reduce power loss on the first path 241.

For example, the display driver circuitry 270 may include a third circuit 273 and a ninth pad 299 connected to the third circuit 273.

For example, the PMIC 210 may provide the third DC signal 233 and/or the fourth DC signal 234 to the third circuit 273 via a fifth path 245 between the sixth pad 226 and the ninth pad 299. For example, the third circuit 273 may provide power to the first pad 291, the second pad 292, the fifth pad 295, the seventh pad 297, the eighth pad 298, and/or the ninth pad 299, based on the third DC signal 233 and/or the fourth DC signal 234. For example, the display driver circuitry 270 may further include a pad 216, a pad 217, and a pad 218. For example, the third circuit 273 may provide power to the pad 216, the pad 217, and/or the pad 218, based on the third DC signal 233 and/or the fourth DC signal 234.

For example, in case that the display driver circuitry 270 includes the first regulator 281, the first regulator 281 in the display driver circuitry 270 may include a terminal 261 connected to the input node 284 of the at least one first circuit 271. For example, the first regulator 281 may include another terminal 262 connected to the fifth pad 295. For example, the first regulator 281 may be disabled within at least a portion of a time interval during which each of the first DC signal 231 and the second DC signal 232 is provided. For example, the first regulator 281 may be disabled based on connecting the first regulator 281 to a ground via the pad 217. For example, the first regulator 281 may be enabled within at least a portion of a time interval during which at least a portion (e.g., a kernel) of an operating system (OS) is loaded into a random access memory (RAM) (e.g., at least a portion of the volatile memory 832 of FIG. 8) of the electronic device 200 via a bootloader, and may be disabled within at least a portion of a time interval being after the at least a portion of the operating system is loaded. Although not illustrated in FIG. 2, like the second regulator 282, which is enabled by providing a voltage a (e.g., about 1.8 V) via the pad 218, the first regulator 281 may be enabled by providing the voltage a via the pad 217.

For example, the first regulator 281 may be enabled based on an execution of a predetermined software application. For example, the predetermined software application may be a software application that displays an image on the display panel 290 based on a relatively high refresh rate. For example, the predetermined software application may be identified in accordance with a user setting.

For example, when the first regulator 281 is enabled, the PMIC 210 may provide the first regulator 281 with the third DC signal 233 and/or the fourth DC signal 234 via the third path 243 between the fifth pad 295 and the sixth pad 226 using the second power supply circuit 212. The fourth DC signal 234 may be converted into the fifth DC signal 235 via the first regulator 281. For example, the fifth DC signal 235 may be provided from the first regulator 281 to the at least one first circuit 271. As a non-limiting example, a fifth DC signal 235, which is adjusted (or fine-tuned) to have a voltage value suitable for the at least one first circuit 271 via the capacitor 283 at the input node 284 of the at least one first circuit 271, may be provided to the at least one first circuit 271. For example, the at least one first circuit 271 may process the image, based on the voltage value.

As described above, the electronic device 200 may reduce power consumed due to displaying an image by driving the at least one first circuit 271 based on the first DC signal 231 and the second DC signal 232.

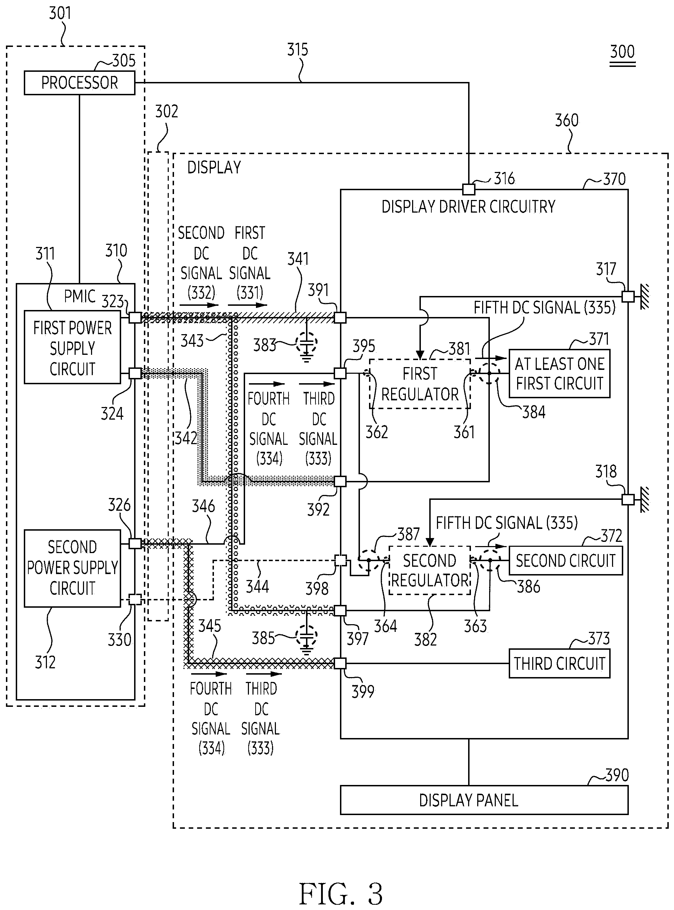

The above descriptions of FIG. 2 illustrate an example of providing power to the at least one first circuit 271 using the first power supply circuit 211 and providing power to the second circuit 272 using the second power supply circuit 212, but the electronic device may also provide power to each of the at least one first circuit 271 and the second circuit 272 using the first power supply circuit 211. The electronic device that provides power to each of the at least one first circuit 271 and the second circuit 272 using the first power supply circuit 211 may be illustrated through FIG. 3.

FIG. 3 is a simplified block diagram of an exemplary electronic device including PMIC that includes a first power supply circuit providing a DC signal for each of at least one first circuit and a second circuit in display driver circuitry and a second power supply circuit providing another DC signal for a third circuit within the display driver circuitry.

Referring to FIG. 3, an electronic device 300 may include a processor 305, PMIC 310, and a display 360. As a non-limiting example, the processor 305 and the PMIC 310 may be attached to a PCB 301 (e.g., a main PCB), and the display 360 may be connected to the PMIC 310 via a connector 302. For example, the connector 302 may include a pin for a first path 341 (and/or a third path 343), a pin for a second path 342, and a pin for a fifth path 345 (and/or a sixth path 346). For example, the connector 302 may further include a pin for a fourth path 344. However, it is not limited thereto.

For example, the processor 305 may be used to obtain an image and provide the obtained image to display driver circuitry 370. For example, the image may be provided from the processor 305 to the display driver circuitry 370 via an interface 315. As a non-limiting example, the interface 315 may be connected to a pad 316 within the display driver circuitry 370. As a non-limiting example, the interface 315 may include MIPI. For example, the processor 305 may include at least a portion of the processor 820 of FIG. 8.

For example, the PMIC 310 may be used to provide the display 360 with power obtained from a battery (e.g., a rechargeable battery) directly or indirectly connected to the PMIC 310.

For example, the display 360 may be used to display an image based on the power obtained from the PMIC 310. For example, the display 360 may include display driver circuitry 370 and a display panel 390. For example, the display driver circuitry 370 may be used to display an image obtained from the processor 305 on the display panel 390. For example, the display driver circuitry 370 may include at least a portion of the DDI 930 of FIG. 9, and the display panel 390 may include at least a portion of the display 910 of FIG. 9.

For example, the display driver circuitry 370 may include at least one first circuit 371 configured to process the image, a second circuit 372 (e.g., GRAM) configured to at least temporarily store the image, and a third circuit 373 configured to provide power to pads (e.g., a plurality of pads including a first pad 391, a second pad 392, a fifth pad 395, a seventh pad 397, an eighth pad 398 (capable of being omitted), and a ninth pad 399) within the display driver circuitry 370.

For example, the display driver circuitry 370 may include a first regulator 381 (e.g., LDO regulator) and a second regulator 382 (e.g., LDO regulator). However, it is not limited thereto. For example, the first regulator 381 and the second regulator 382 may be excluded from the display driver circuitry 370.

For example, the display driver circuitry 370 may include a first pad 391 connected to an input node 384 of the at least one first circuit 371, and a second pad 392 connected to the input node 384. For example, the input node 384 may be connected to a capacitor 383 within the display 360 via the first pad 391. However, it is not limited thereto. For example, the input node 384 may be connected to the capacitor 383 via another pad distinct from the first pad 391. For example, the capacitor 383 may be located outside the display 360.

For example, the PMIC 310 may include a third pad 323, a fourth pad 324, and a first power supply circuit 311 respectively connected to the third pad 323 and the fourth pad 324.

For example, the PMIC 310 may provide a first DC signal 331 to the at least one first circuit 371 via a first path 341 between the first pad 391 and the third pad 323, using the first power supply circuit 311. For example, the PMIC 310 may identify a voltage value of the first DC signal 331 at the input node 384 via a second path 342 between the second pad 392 and the fourth pad 324, using the first power supply circuit 311. For example, the PMIC 310 may provide, to the at least one first circuit 371 via the first path 341, a second DC signal 332 obtained based on the voltage value of the first DC signal 331 at the input node 384, using the first power supply circuit 311. As a non-limiting example, the second DC signal 332, which is adjusted (or fine-tuned) to have a voltage value suitable for the at least one first circuit 371 via the capacitor 383 at the input node 384, may be provided to the at least one first circuit 371. For example, the at least one first circuit 371 may process the image based on the voltage value.

For example, unlike the second path 142 of FIG. 1, the second path 342 is used to measure a voltage value at the input node 384 located within the display driver circuitry 370, so a voltage value (e.g., about 1.0 V) of each of the first DC signal 331 and the second DC signal 332 may be lower than the first voltage value (e.g., about 1.8 V) of the DC signal 131 of FIG. 1. For example, since the voltage value of each of the first DC signal 331 and the second DC signal 332 is lower than the first voltage value of the DC signal 131, power consumed due to providing the first DC signal 331 and the second DC signal 332 via the first path 341 may be less than power consumed due to providing the DC signal 131 via the first path 141. For example, since the voltage value of each of the first DC signal 331 and the second DC signal 332 is lower than the first voltage value of the DC signal 131, the display driver circuitry 370 may bypass using the first regulator 381 for processing the image by using the at least one first circuit 371, unlike the display driver circuitry 170 of FIG. 1. For example, the display driver circuitry 370 may reduce power consumption due to the use of the first regulator 381. For example, unlike the electronic device illustrated in FIG. 1, the electronic device 300 may reduce power consumption while displaying an image via the display 360, by including the second path 342 for measuring a voltage value at the input node 384 located within the display driver circuitry 370.

Although not illustrated in FIG. 3, the electronic device 300 may include a PCB (or FPCB) and a connector attached to the PCB and including a pin connected to the first pad 391 for the first path 341 and another pin connected to the second pad 392 for the second path 342. For example, the PCB may include a plurality of signal lines comprising a first signal line between the first pad 391 and the pin, and a second signal line between the second pad 392 and the another pin. For example, the first signal line may be electrically separated from signal lines different from the first signal line from among the plurality of signal lines, and the second signal line may be electrically separated from signal lines different from the second signal line from among the plurality of signal lines. For example, in order to reduce noise from being included in each of the first DC signal 331 and the second DC signal 332, each of the first signal line and the second signal line may be electrically separated from other signal lines from among the plurality of signal lines. For example, a second layer of the PCB, which is directly below a first layer of the PCB where the first signal line (and/or the second signal line) is located, and a third layer of the PCB, which is directly above the first layer, may be connected to a ground. However, it is not limited thereto.

For example, the display driver circuitry 370 may include a seventh pad 397.

For example, the PMIC 310 may provide the first DC signal 331 to the second circuit 372 via a third path 343 between the third pad 323 and the seventh pad 397, using the first power supply circuit 311. For example, the PMIC 310 may identify a voltage value of the first DC signal 331 at the input node 384 via the second path 342 between the second pad 392 and the fourth pad 324, using the first power supply circuit 311. For example, the PMIC 310 may provide, to the second circuit 372 via the third path 343, the second DC signal 332 obtained based on the voltage value of the first DC signal 331 at the input node 384, using the first power supply circuit 311. As a non-limiting example, the second DC signal 332, which is adjusted (or fine-tuned) to have a voltage value suitable for the third circuit 373 via a capacitor 385 at an input node 386, may be provided to the second circuit 372. For example, the second circuit 372 may at least temporarily store the image based on the voltage value.

For example, unlike the second path 142 of FIG. 1, the second path 342 is used to measure a voltage value at the input node 384 located within the display driver circuitry 370, so a voltage value (e.g., about 1.0 V) of each of the first DC signal 331 and the second DC signal 332 may be lower than the first voltage value (e.g., about 1.8 V) of the DC signal 131 of FIG. 1. For example, since the voltage value of each of the first DC signal 331 and the second DC signal 332 is lower than the first voltage value of the DC signal 131, power consumed due to providing the first DC signal 331 and the second DC signal 332 via the third path 343 may be less than power consumed due to providing the DC signal 133 via the third path 143. For example, since the voltage value of each of the first DC signal 331 and the second DC signal 332 is lower than the first voltage value of the DC signal 133, the display driver circuitry 370 may bypass using the second regulator 382 for at least temporarily storing the image by using the second circuit 372, unlike the display driver circuitry 170 of FIG. 1. For example, the display driver circuitry 370 may reduce power consumption due to the use of the second regulator 382. For example, unlike the electronic device illustrated in FIG. 1, the electronic device 300 may reduce power consumption while displaying an image via the display 360, by including the second path 342 for measuring a voltage value at the input node 384 located within the display driver circuitry 370.

Although not illustrated in FIG. 3, the connector may further include a pin connected to the seventh pad 397 for the third path 343. For example, the plurality of signal lines in the PCB may further include a third signal line between the seventh pad 397 and the pin. For example, the third signal line may be electrically separated from other signal lines different from the third signal line from among the plurality of signal lines. For example, in order to reduce noise from being included in each of the first DC signal 331 and the second DC signal 332, the third signal line may be electrically separated from other signal lines from among the plurality of signal lines. For example, the second layer of the PCB, which is directly below the first layer of the PCB where the third signal line is located, and the third layer of the PCB, which is directly above the first layer, may be connected to a ground. However, it is not limited thereto.

For example, the PMIC 310 may include a second power supply circuit 312 and a sixth pad 326 connected to the second power supply circuit 312. For example, the display driver circuitry 370 may include a third circuit 373 and a ninth pad 399 connected to the third circuit 373.

For example, the PMIC 310 may provide a third DC signal 333 (and/or a fourth DC signal 334) to the third circuit 373 via a fifth path 345 between the sixth pad 326 and the ninth pad 399. Each of the third DC signal 333 and the fourth DC signal 334 will be exemplified below. For example, the third circuit 373 may provide power to the first pad 391, the second pad 392, the fifth pad 395, the seventh pad 397, the eighth pad 398 (capable of being omitted), and/or the ninth pad 399, based on the third DC signal 333 (and/or the fourth DC signal 334). For example, the display driver circuitry 370 may further include a pad 316, a pad 317, and a pad 318. For example, the third circuit 373 may provide power to the pad 316, the pad 317, and/or the pad 318, based on the third DC signal 333 (and/or the fourth DC signal 334).

For example, in case that the display driver circuitry 370 includes the first regulator 381 and the second regulator 382, the first regulator 381 in the display driver circuitry 370 may include a terminal 361 connected to the input node 384 of the at least one first circuit 371. For example, the first regulator 381 may include another terminal 362 connected to the fifth pad 395. For example, the second regulator 382 may include a terminal 363 connected to the input node 386 of the second circuit 372. For example, the second regulator 382 may include another terminal 364 connected to the fifth pad 395 via a node 387.

For example, each of the first regulator 381 and the second regulator 382 may be disabled within at least a portion of a time interval during which each of the first DC signal 331 and the second DC signal 332 is provided. For example, each of the first regulator 381 and the second regulator 382 may be disabled based on connecting the pad 317 and the pad 318 to a ground. For example, each of the first regulator 381 and the second regulator 382 may be disabled within at least a portion of a time interval during which at least a portion of an operating system is loaded into RAM (e.g., at least a portion of the volatile memory 832 of FIG. 8) of the electronic device 300 via a bootloader. Although not illustrated in FIG. 3, like the second regulator 282 of FIG. 2, which is enabled by providing a voltage a (e.g., about 1.8 V) via the pad 218, each of the first regulator 381 and the second regulator 382 may be enabled by providing the voltage a via each of the pad 317 and the pad 318.

For example, each of the first regulator 381 and the second regulator 382 may be enabled based on an execution of the predetermined software application.

For example, when the first regulator 381 and the second regulator 382 are enabled, the PMIC 310 may provide the third DC signal 333 to each of the first regulator 381 and the second regulator 382 via a sixth path 346 between the fifth pad 395 and the sixth pad 326, using the second power supply circuit 312. For example, when the electronic device 300 includes an eighth pad 338 in the display driver circuitry 370 connected to the node 387 and a tenth pad 330 in the PMIC 310 connected to the second power supply circuit 312, the PMIC 310 may identify a voltage value of the third DC signal 333 at the node 387 via the fourth path 344, using the second voltage supply circuit 312. For example, the PMIC 310 may provide, to each of the first regulator 381 and the second regulator 382 via the sixth path 346, the fourth DC signal 334 obtained based on the voltage value of the third DC signal 333 by using the second voltage supply circuit 312. For example, the fourth DC signal 334 may be converted into a fifth DC signal 335 via each of the first regulator 381 and the second regulator 382. For example, a voltage value (about 1.0 V) of the fifth DC signal 335 may be lower than a voltage value (e.g., about 1.8 V) of each of the third DC signal 333 and the fourth DC signal 334. For example, the fifth DC signal 335 may be provided to the at least one first circuit 371 and the second circuit 372 from each of the first regulator 381 and the second regulator 382. As a non-limiting example, the fifth DC signal 335, which is adjusted (or fine-tuned) to have a voltage value suitable for each of the at least one first circuit 371 and the second circuit 372 via each of the capacitor 383 and the capacitor 385 at each of the input node 384 and the input node 386, may be provided to each of the at least one first circuit 371 and the second circuit 372. For example, the at least one first circuit 371 may process the image based on the voltage value, and the second circuit 372 may at least temporarily store the image based on the voltage value.

As described above, the electronic device 300 may reduce power consumed due to displaying an image by driving the at least one first circuit 371 and the second circuit 372 based on the first DC signal 331 and the second DC signal 332.

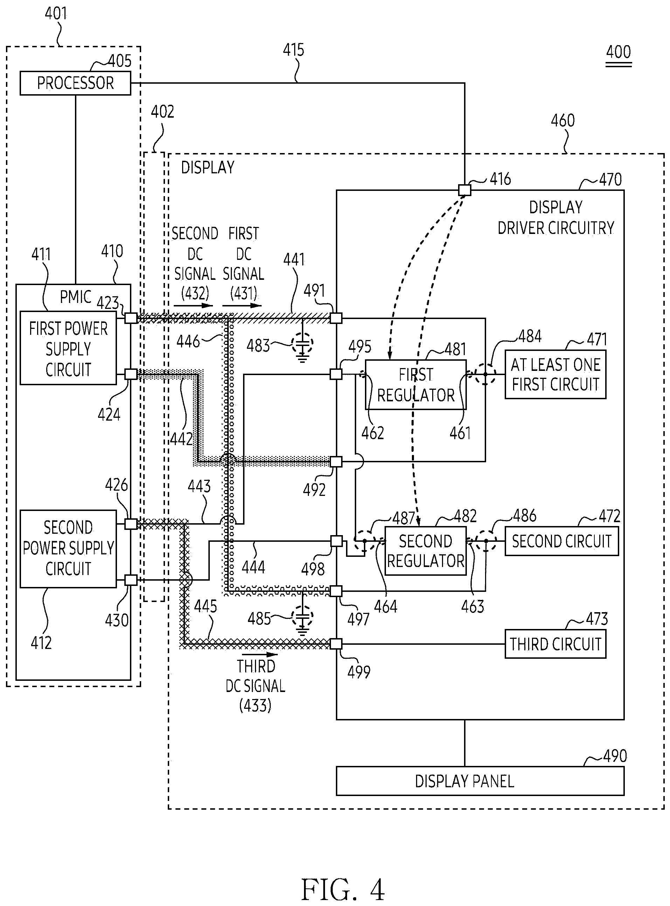

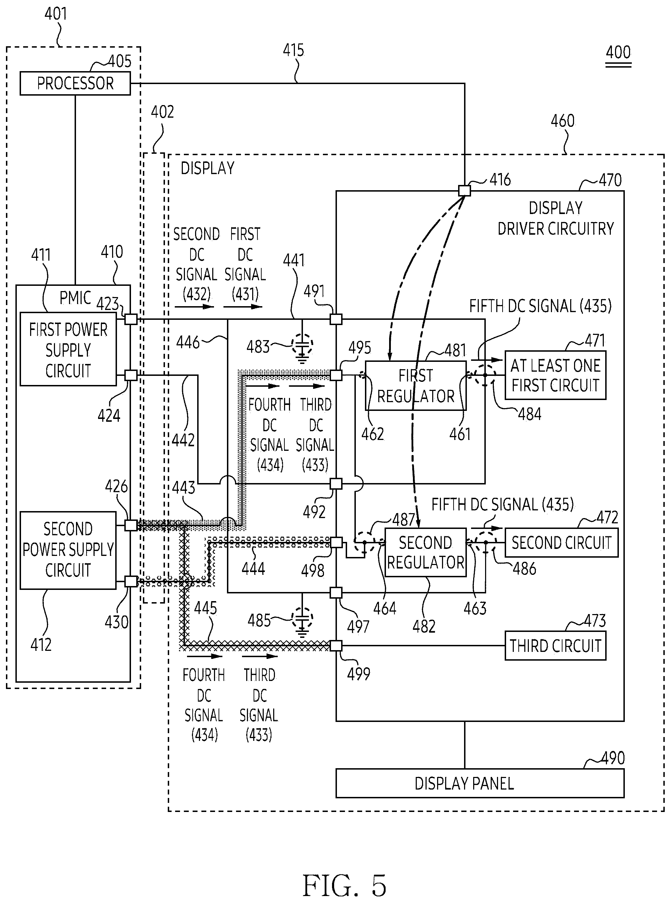

The above descriptions of FIGS. 2 and 3 illustrate that enabling or disabling a regulator (e.g., the first regulator 281 and the first regulator 381) connected to at least one first circuit (e.g., the at least one first circuit 271 and the at least one first circuit 371) and/or a regulator (e.g., the second regulator 282 and the second regulator 382) connected to a second circuit (e.g., the second circuit 271 and the second circuit 371) is executed according to a voltage, but enabling or disabling the regulator connected to the at least one first circuit and/or the regulator connected to the second circuit may also be executed via a command provided from a processor (e.g., the processor 205 and the processor 305) to display driver circuitry (e.g., the display driver circuitry 270 and the display driver circuitry 370) via an interface (e.g., the interface 215 and the interface 315). Enabling or disabling the regulator connected to the at least one first circuit and the regulator connected to the second circuit via the command may be exemplified through FIG. 4 and FIG. 5.

FIGS. 4 and 5 are simplified block diagrams of an exemplary electronic device including PMIC adaptively providing a DC signal or another DC signal for at least one first circuit and a second circuit within display driver circuitry according to a type of command provided from a processor to the display driver circuitry.

Referring to FIG. 4, an electronic device 400 may include a processor 405, PMIC 410, and a display 460. As a non-limiting example, the processor 405 and the PMIC 410 may be attached to a PCB 401 (e.g., a main PCB), and the display 460 may be connected to the PMIC 410 via a connector 402. For example, the connector 402 may include a pin for a first path 441 (and/or a sixth path 446), a pin for a second path 442, and a pin for a third path 443 (and/or a fifth path 445). For example, the connector 402 may further include a pin for a fourth path 444. However, it is not limited thereto.

For example, the processor 405 may be used to obtain an image and provide the obtained image to display driver circuitry 470. For example, the image may be provided from the processor 405 to the display driver circuitry 470 via an interface 415. As a non-limiting example, the interface 415 may be connected to a pad 416 within the display driver circuitry 470. As a non-limiting example, the interface 415 may include MIPI. For example, the processor 405 may include at least a portion of the processor 820 of FIG. 8.

For example, the PMIC 410 may be used to provide the display 460 with power obtained from a battery (e.g., a rechargeable battery) directly or indirectly connected to the PMIC 410.

For example, the display 460 may be used to display an image based on the power obtained from the PMIC 410. For example, the display 460 may include display driver circuitry 470 and a display panel 490. For example, the display driver circuitry 470 may be used to display an image obtained from the processor 405 on the display panel 490. For example, the display driver circuitry 470 may include at least a portion of the DDI 930 of FIG. 9, and the display panel 490 may include at least a portion of the display 910 of FIG. 9.

For example, the display driver circuitry 470 may include at least one first circuit 471 configured to process the image, a second circuit 472 (e.g., GRAM) configured to at least temporarily store the image, and a third circuit 473 configured to provide power to pads (e.g., a plurality of pads including a first pad 491, a second pad 492, a fifth pad 495, a seventh pad 497, an eighth pad 498, and a ninth pad 499) within the display driver circuitry 470.

For example, the display driver circuitry 470 may include a first pad 491 connected to an input node 484 of the at least one first circuit 471, and a second pad 492 connected to the input node 484. For example, the input node 484 may be connected to a capacitor 483 within the display 460 via the first pad 491. However, it is not limited thereto. For example, the input node 484 may be connected to the capacitor 483 via another pad distinct from the first pad 491. For example, the capacitor 483 may be located outside the display 460.

For example, the display driver circuitry 470 may include a seventh pad 497 connected to an input node 486 of the second circuit 472. For example, the input node 486 may be connected to a capacitor 485 within the display 460 via the seventh pad 497. However, it is not limited thereto. For example, the capacitor 485 may be located outside the display 460.

For example, the display driver circuitry 470 may include a first regulator 481 and a second regulator 482. For example, the first regulator 481 may include a terminal 461 connected to the input node 484 and another terminal 462 connected to the fifth pad 495. For example, the second regulator 482 may include a terminal 463 connected to the input node 486 and another terminal 464 connected to an eighth pad 498 via a node 487.

For example, the PMIC 410 may include a first power supply circuit 411 respectively connected to a third pad 423 and a fourth pad 424, a third pad 323, and a fourth pad 324.

For example, the processor 405 may provide a first command to the display driver circuitry 470 via the interface 415 to disable each of the first regulator 481 and the second regulator 482. For example, each of the first regulator 481 and the second regulator 482 may be disabled according to the first command.

For example, the PMIC 410 may provide a first DC signal 431 to the at least one first circuit 471 via a first path 441 between the first pad 491 and the third pad 423 using the first power supply circuit 411 while the first regulator 481 is disabled according to the first command. For example, the PMIC 410 may identify a voltage value of the first DC signal 431 at the input node 484 via a second path 442 between the second pad 492 and the fourth pad 424, using the first power supply circuit 411. For example, the PMIC 410 may provide, to the at least one first circuit 471 via the first path 441, a second DC signal 432 obtained based on the voltage value of the first DC signal 431 at the input node 484, using the first power supply circuit 411. As a non-limiting example, the second DC signal 432, which is adjusted (or fine-tuned) to have a voltage value suitable for the at least one first circuit 471 via the capacitor 483 at the input node 484, may be provided to the at least one first circuit 471. For example, the at least one first circuit 471 may process the image based on the voltage value.

For example, the PMIC 410 may provide the first DC signal 431 to the second circuit 472 via a sixth path 446 between the seventh pad 497 and the third pad 423 using the first power supply circuit 411 while the second regulator 482 is disabled according to the first command. For example, the PMIC 410 may identify a voltage value of the first DC signal 431 at the input node 484 via the second path 442 between the second pad 492 and the fourth pad 424, using the first power supply circuit 411. For example, the PMIC 410 may provide, to the second circuit 472 via the sixth path 446, the second DC signal 432 obtained based on the voltage value of the first DC signal 431 at the input node 484, using the first power supply circuit 411. As a non-limiting example, the second DC signal 432, which is adjusted (or fine-tuned) to have a voltage value suitable for the second circuit 472 via the capacitor 485 at the input node 486, may be provided to the second circuit 472. For example, the second circuit 472 may at least temporarily store the image based on the voltage value.

Although not illustrated in FIG. 4, the electronic device 400 may include a connector exemplified through the descriptions of FIGS. 2 and 3. Although not illustrated in FIG. 4, the electronic device 400 may include a PCB exemplified through the descriptions of FIGS. 2 and 3.

For example, the PMIC 410 may include a second power supply circuit 412 and a sixth pad 426 connected to the second power supply circuit 412. For example, the display driver circuit 470 may include a third circuit 473 and a ninth pad 499 connected to the third circuit 473.

For example, the PMIC 410 may provide the third DC signal 433 to the third circuit 473 via a fifth path 445 between the sixth pad 426 and the ninth pad 499 while the first regulator 481 and the second regulator 482 are disabled according to the first command. For example, the third DC signal 433 may have a voltage value higher than a voltage value of each of the first DC signal 431 and the second DC signal 432. For example, the third circuit 473 may provide power to the first pad 491, the second pad 492, the fifth pad 495, the seventh pad 497, the eighth pad 498, and/or the ninth pad 499, based on the third DC signal 433. For example, the third circuit 473 may provide power to the pad 416, based on the third DC signal 433.

Components of FIG. 4, which are not exemplified through the descriptions of FIG. 4, will be illustrated through the description of FIG. 5.

Although not illustrated in FIG. 4, the processor 405 may provide a second command to the display driver circuitry 470 via the interface 415 to enable each of the first regulator 481 and the second regulator 482. Operations according to the second command may be exemplified through FIG. 5.

Referring to FIG. 5, the processor 405 may provide the second command to the display driver circuit 470 via the interface 415 to enable each of the first regulator 481 and the second regulator 482. For example, each of the first regulator 481 and the second regulator 482 may be enabled according to the second command.

For example, the PMIC 410 may provide the third DC signal 433 to the second regulator 482 via the third path 443 between the fifth pad 495 and the sixth pad 496 using the second power supply circuit 412 while the second regulator 482 is enabled according to the second command. For example, the PMIC 410 may identify a voltage value of the third DC signal 433 at the node 487 via the fourth path 444 between the eighth pad 498 and the tenth pad 430 using the second voltage supply circuit 412. For example, the PMIC 410 may provide, to the second regulator 482 via the third path 443, a fourth DC signal 434 obtained based on the voltage value of the third DC signal 433 at the node 487 using the second power supply circuit 412. For example, the fourth DC signal 434 may be converted into a fifth DC signal 435 via the second regulator 482. For example, a voltage value (about 1.0 V) of the fifth DC signal 435 may be lower than a voltage value (e.g., about 1.8 V) of each of the third DC signal 433 and the fourth DC signal 434. For example, the fifth DC signal 435 may be provided to the second circuit 472 from the second regulator 482. As a non-limiting example, the fifth DC signal 435, which is adjusted (or fine-tuned) to have a voltage value suitable for the second circuit 472 via the capacitor 485 at the input node 486 of the second circuit 472, may be provided to the second circuit 472. For example, the second circuit 472 may at least temporarily store the image provided from the processor 405 via the interface 415 based on the voltage value.

For example, the PMIC 410 may provide the third DC signal 433 and the second DC signal 434 to the first regulator 481 via the third path 443 between the fifth pad 495 and the sixth pad 496 using the second power supply circuit 412, while the first regulator 481 is enabled according to the second command. For example, the fourth DC signal 434 may be converted into the fifth DC signal 435 via the first regulator 481. For example, the voltage value (about 1.0 V) of the fifth DC signal 435 may be lower than a voltage value (e.g., about 1.8 V) of each of the third DC signal 433 and the fourth DC signal 434. For example, the fifth DC signal 435 may be provided from the first regulator 481 to the at least one first circuit 471. As a non-limiting example, the fifth DC signal 435, which is adjusted (or fine-tuned) to have a voltage value suitable for the at least one first circuit 471 via the capacitor 483 at the input node 484 of the at least one first circuit 471, may be provided to the at least one first circuit 471. For example, the at least one first circuit 471 may process the image provided from the processor 405 via the interface 415 based on the voltage value.

For example, the PMIC 410 may provide the third DC signal 433 and the fourth DC signal 434 to the third circuit 473 via the fifth path 445 between the sixth pad 426 and the ninth pad 499 while the first regulator 481 and the second regulator 482 are enabled according to the second command. For example, each of the third DC signal 433 and the fourth DC signal 434 may have a voltage value higher than a voltage value of the fifth DC signal 435. For example, the third circuit 473 may provide power to the first pad 491, the second pad 492, the fifth pad 495, the seventh pad 497, the eighth pad 498, and/or the ninth pad 499, based on the third DC signal 433 and/or the fourth DC signal 434. For example, the third circuit 473 may provide power to the pad 416, based on the third DC signal 433 and/or the fourth DC signal 434.

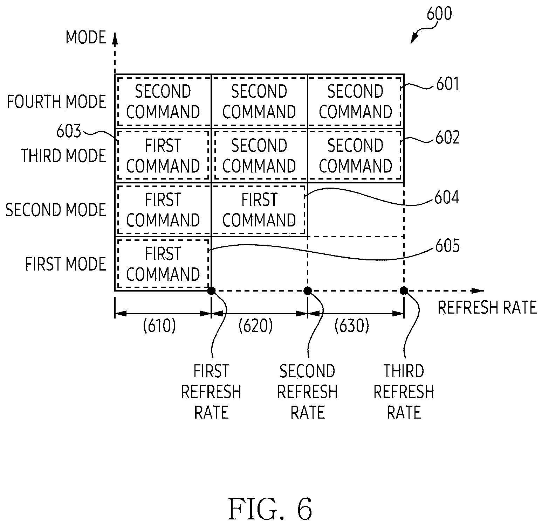

As described above, the electronic device 400 may adaptively change providing the first DC signal 431 and the second DC signal 432 or providing the third DC signal 433 and the fourth DC signal 434 according to a type (e.g., the first command and the second command) of command provided from the processor 405 to the display driver circuitry 470. For example, one of the first command and the second command may be identified according to a type of service (or mode) provided via the display panel 490. Identifying the command may be exemplified through FIG. 6.

FIG. 6 illustrates a chart indicating an exemplary method of identifying a command provided from a processor to display driver circuitry.

Referring to FIG. 6, a chart 600 may indicate a criterion (or condition) that identifies a command provided from a processor 405 to display driver circuitry 470. A horizontal axis of the chart 600 may indicate a refresh rate, and a vertical axis of the chart 600 may indicate a mode of an electronic device 400.

For example, a first mode may indicate a mode in which the processor 405 is in a sleep state within at least a portion of a time interval during which an image is displayed on a display panel 490. As a non-limiting example, the first mode may include an always on display (AOD) mode. As a non-limiting example, the first mode may indicate a mode of displaying an image at a brightness level lower than or equal to a reference brightness level. As a non-limiting example, the first mode may indicate a mode provided when a remaining level of a battery is lower than a reference level. For example, the first mode may be provided within a frequency range 610 between a minimum refresh rate and a first refresh rate.

For example, a second mode may indicate a mode that consumes less power to display an image on the display panel 490 than a third mode to be exemplified below. For example, the second mode may include a normal speed mode. For example, power consumed to display an image based on the second mode may be less than power consumed to display an image based on the third mode. For example, the second mode may provide a longer usage time of the electronic device 400 than the third mode. For example, the second mode may be provided through the display driver circuitry 470 driven according to a first clock rate. For example, the second mode may be provided within the frequency range 610 and a frequency range 620 between the first refresh rate and a second refresh rate.

For example, the third mode may indicate a mode that consumes more power to display an image on the display panel 490 than the second mode. For example, the third mode may include a high speed mode. For example, power consumed to display an image based on the third mode may be greater than the power consumed to display an image based on the second mode, but a quality of the image displayed based on the third mode may be higher than a quality of the image displayed based on the second mode. For example, the third mode may provide a smoother image change (or transition) than the second mode. For example, the third mode may be provided through the display driver circuitry 470 driven by a second clock rate higher than the first clock rate. For example, the third mode may be provided within the frequency range 610, the frequency range 620, and a frequency range 630 between the second refresh rate and a third refresh rate (e.g., the maximum refresh rate).

For example, the fourth mode may indicate a mode of displaying an image at a brightness level higher than the reference brightness level. For example, the fourth mode may be provided in a state having a relatively bright illuminance. For example, the fourth mode may be provided within the frequency range 610, the frequency range 620, and the frequency range 630.

For example, the processor 410 may provide, to the display driver circuitry 470 in the fourth mode, the second command, independently of a refresh rate, as indicated by a region 601. For example, the processor 410 may provide the second command to the display driver circuitry 470 so that more stable power is provided to the display driver circuitry 470.

For example, in the third mode, the processor 410 may provide, according to a refresh rate, the first command to the display driver circuitry 470 or the second command to the display driver circuitry 470. For example, in case that a refresh rate in the third mode is within the frequency range 620 or the frequency range 630, the processor 410 may provide the second command to the display driver circuitry 470 so that more stable power is provided to the display driver circuitry 470, as indicated by a region 602. For example, in case that a refresh rate in the third mode is within the frequency range 610, the processor 410 may provide the first command to the display driver circuitry 470 so that less power is consumed due to displaying the image, as indicated by a region 603.

For example, in the second mode, the processor 410 may provide the first command to the display driver circuitry 470, independently of a refresh rate, as indicated by a region 604. For example, the processor 410 may provide the first command to the display driver circuitry 470 so that less power is consumed due to displaying the image.

For example, the processor 410 may provide the first command to the display driver circuitry 470 in the first mode, as indicated by a region 605. For example, the processor 410 may provide the first command to the display driver circuitry 470 so that less power is consumed due to displaying the image.

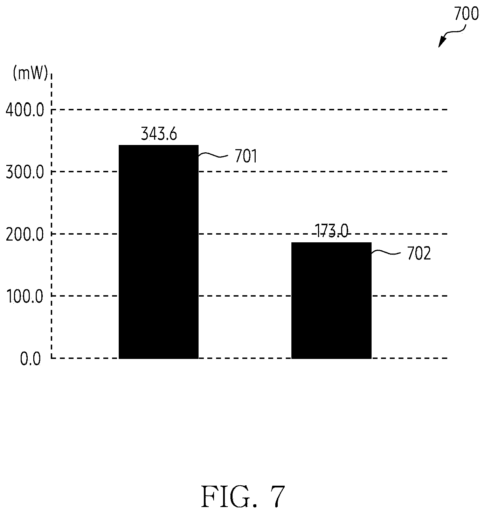

An electronic device (e.g., the electronic device 200, the electronic device 300, and the electronic device 400) exemplified through the above descriptions may reduce power consumed for displaying an image compared to the electronic device exemplified through FIG. 1. The reduction in the power may be exemplified through FIG. 7.

FIG. 7 illustrates a chart indicating power consumed by providing a DC signal using a first power supply circuit within PMIC.

Referring to FIG. 7, a vertical axis of a chart 700 indicates power consumed for displaying an image, and a unit of the vertical axis of the chart 700 is milli-watt. A bar 701 in the chart 700 may indicate power consumed when displaying an image through the electronic device exemplified through FIG. 1, and a bar 702 of the chart 700 may indicate power consumed when displaying an image through the electronic device 200 exemplified through FIG. 2. As shown by the chart 700, power (e.g., 173 milli-watt (mW)) consumed due to providing a DC signal to the display driver circuitry 270 using the PMIC 210 may be less than power (e.g., 343.6 mW) consumed due to providing a DC signal to the display driver circuitry 170 using the PMIC 110. For example, an electronic device (e.g., the electronic device 200, the electronic device 300, and the electronic device 400) exemplified through FIGS. 2 to 5 may display an image based on low power.

FIG. 8 is a block diagram illustrating an electronic device 801 in a network environment 800 according to various embodiments. Referring to FIG. 8, the electronic device 801 in the network environment 800 may communicate with an electronic device 802 via a first network 898 (e.g., a short-range wireless communication network), or at least one of an electronic device 804 or a server 808 via a second network 899 (e.g., a long-range wireless communication network). According to an embodiment, the electronic device 801 may communicate with the electronic device 804 via the server 808. According to an embodiment, the electronic device 801 may include a processor 820, memory 830, an input module 850, a sound output module 855, a display module 860, an audio module 870, a sensor module 876, an interface 877, a connecting terminal 878, a haptic module 879, a camera module 880, a power management module 888, a battery 889, a communication module 890, a subscriber identification module(SIM) 896, or an antenna module 897. In some embodiments, at least one of the components (e.g., the connecting terminal 878) may be omitted from the electronic device 801, or one or more other components may be added in the electronic device 801. In some embodiments, some of the components (e.g., the sensor module 876, the camera module 880, or the antenna module 897) may be implemented as a single component (e.g., the display module 860).

The processor 820 may execute, for example, software (e.g., a program 840) to control at least one other component (e.g., a hardware or software component) of the electronic device 801 coupled with the processor 820, and may perform various data processing or computation. According to an embodiment, as at least part of the data processing or computation, the processor 820 may store a command or data received from another component (e.g., the sensor module 876 or the communication module 890) in volatile memory 832, process the command or the data stored in the volatile memory 832, and store resulting data in non-volatile memory 834. According to an embodiment, the processor 820 may include a main processor 821 (e.g., a central processing unit (CPU) or an application processor (AP)), or an auxiliary processor 823 (e.g., a graphics processing unit (GPU), a neural processing unit (NPU), an image signal processor (ISP), a sensor hub processor, or a communication processor (CP)) that is operable independently from, or in conjunction with, the main processor 821. For example, when the electronic device 801 includes the main processor 821 and the auxiliary processor 823, the auxiliary processor 823 may be adapted to consume less power than the main processor 821, or to be specific to a specified function. The auxiliary processor 823 may be implemented as separate from, or as part of the main processor 821.

The auxiliary processor 823 may control at least some of functions or states related to at least one component (e.g., the display module 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). According to an embodiment, the auxiliary processor 823 (e.g., an image signal processor or a communication processor) may be implemented as part of another component (e.g., the camera module 880 or the communication module 890) functionally related to the auxiliary processor 823. According to an embodiment, the auxiliary processor 823 (e.g., the neural processing unit) may include a hardware structure specified for artificial intelligence model processing. An artificial intelligence model may be generated by machine learning. Such learning may be performed, e.g., by the electronic device 801 where the artificial intelligence is performed or via a separate server (e.g., the server 808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input module 850 may receive a command or data to be used by another component (e.g., the processor 820) of the electronic device 801, from the outside (e.g., a user) of the electronic device 801. The input module 850 may include, for example, a microphone, a mouse, a keyboard, a key (e.g., a button), or a digital pen (e.g., a stylus pen).

The sound output module 855 may output sound signals to the outside of the electronic device 801. The sound output module 855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 860 may visually provide information to the outside (e.g., a user) of the electronic device 801. The display module 860 may include, for example, a display, a hologram device, or a projector and control circuitry to control a corresponding one of the display, hologram device, and projector. According to an embodiment, the display module 860 may include a touch sensor adapted to detect a touch, or a pressure sensor adapted to measure the intensity of force incurred by the touch.

The audio module 870 may convert a sound into an electrical signal and vice versa. According to an embodiment, the audio module 870 may obtain the sound via the input module 850, or output the sound via the sound output module 855 or a headphone of an external electronic device (e.g., an electronic device 802) directly (e.g., wiredly) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. According to an embodiment, the sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device (e.g., the electronic device 802) directly (e.g., wiredly) or wirelessly. According to an embodiment, the interface 877 may include, for example, a high definition multimedia interface (HDMI), a universal serial bus (USB) interface, a secure digital (SD) card interface, or an audio interface.

A connecting terminal 878 may include a connector via which the electronic device 801 may be physically connected with the external electronic device (e.g., the electronic device 802). According to an embodiment, the connecting terminal 878 may include, for example, an HDMI connector, a USB connector, a SD card connector, or an audio connector (e.g., a headphone connector).

The haptic module 879 may convert an electrical signal into a mechanical stimulus (e.g., a vibration or a movement) or electrical stimulus which may be recognized by a user via his tactile sensation or kinesthetic sensation. According to an embodiment, the haptic module 879 may include, for example, a motor, a piezoelectric element, or an electric stimulator.

The camera module 880 may capture a still image or moving images. According to an embodiment, the camera module 880 may include one or more lenses, image sensors, image signal processors, or flashes.

The power management module 888 may manage power supplied to the electronic device 801. According to an embodiment, the power management module 888 may be implemented as at least part of, for example, a power management integrated circuit (PMIC).

The battery 889 may supply power to at least one component of the electronic device 801. According to an embodiment, the battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the application processor (AP)) and supports a direct (e.g., wired) communication or a wireless communication. According to an embodiment, the communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as Bluetooth^{™}, wireless-fidelity (Wi-Fi) direct, or infrared data association (IrDA)) or the second network 899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The wireless communication module 892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 892 may support a high-frequency band (e.g., the mmWave band) to achieve, e.g., a high data transmission rate. The wireless communication module 892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 892 may support various requirements specified in the electronic device 801, an external electronic device (e.g., the electronic device 804), or a network system (e.g., the second network 899). According to an embodiment, the wireless communication module 892 may support a peak data rate (e.g., 20Gbps or more) for implementing eMBB, loss coverage (e.g., 864dB or less) for implementing mMTC, or U-plane latency (e.g., 0.5ms or less for each of downlink (DL) and uplink (UL), or a round trip of 8ms or less) for implementing URLLC.

The antenna module 897 may transmit or receive a signal or power to or from the outside (e.g., the external electronic device) of the electronic device 801. According to an embodiment, the antenna module 897 may include an antenna including a radiating element composed of a conductive material or a conductive pattern formed in or on a substrate (e.g., a printed circuit board (PCB)). According to an embodiment, the antenna module 897 may include a plurality of antennas (e.g., array antennas). In such a case, at least one antenna appropriate for a communication scheme used in the communication network, such as the first network 898 or the second network 899, may be selected, for example, by the communication module 890 (e.g., the wireless communication module 892) from the plurality of antennas. The signal or the power may then be transmitted or received between the communication module 890 and the external electronic device via the selected at least one antenna. According to an embodiment, another component (e.g., a radio frequency integrated circuit (RFIC)) other than the radiating element may be additionally formed as part of the antenna module 897.

According to various embodiments, the antenna module 897 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 801 and the external electronic device 804 via the server 808 coupled with the second network 899. Each of the electronic devices 802 or 804 may be a device of a same type as, or a different type, from the electronic device 801. According to an embodiment, all or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 801. The electronic device 801 may provide the outcome, with or without further processing of the outcome, as at least part of a reply to the request. To that end, a cloud computing, distributed computing, mobile edge computing (MEC), or client-server computing technology may be used, for example. The electronic device 801 may provide ultra low-latency services using, e.g., distributed computing or mobile edge computing. In another embodiment, the external electronic device 804 may include an internet-of-things (IoT) device. The server 808 may be an intelligent server using machine learning and/or a neural network. According to an embodiment, the external electronic device 804 or the server 808 may be included in the second network 899. The electronic device 801 may be applied to intelligent services (e.g., smart home, smart city, smart car, or healthcare) based on 5G communication technology or IoT-related technology.

FIG. 9 is a block diagram 900 illustrating the display module 860 according to various embodiments. Referring to FIG. 9, the display module 860 may include a display 910 and a display driver integrated circuit (DDI) 930 to control the display 910. The DDI 930 may include an interface module 931, memory 933 (e.g., buffer memory), an image processing module 935, or a mapping module 937. The DDI 930 may receive image information that contains image data or an image control signal corresponding to a command to control the image data from another component of the electronic device 801 via the interface module 931. For example, according to an embodiment, the image information may be received from the processor 820 (e.g., the main processor 821 (e.g., an application processor)) or the auxiliary processor 823 (e.g., a graphics processing unit) operated independently from the function of the main processor 821. The DDI 930 may communicate, for example, with touch circuitry 950 or the sensor module 876 via the interface module 931. The DDI 930 may also store at least part of the received image information in the memory 933, for example, on a frame by frame basis. The image processing module 935 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 910. The mapping module 937 may generate a voltage value or a current value corresponding to the image data pre-processed or post-processed by the image processing module 935. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 910 may be driven, for example, based at least in part on the voltage value or the current value such that visual information (e.g., a text, an image, or an icon) corresponding to the image data may be displayed via the display 910.

According to an embodiment, the display module 860 may further include the touch circuitry 950. The touch circuitry 950 may include a touch sensor 951 and a touch sensor IC 953 to control the touch sensor 951. The touch sensor IC 953 may control the touch sensor 951 to sense a touch input or a hovering input with respect to a certain position on the display 910. To achieve this, for example, the touch sensor 951 may detect (e.g., measure) a change in a signal (e.g., a voltage, a quantity of light, a resistance, or a quantity of one or more electric charges) corresponding to the certain position on the display 910. The touch circuitry 950 may provide input information (e.g., a position, an area, a pressure, or a time) indicative of the touch input or the hovering input detected via the touch sensor 951 to the processor 820. According to an embodiment, at least part (e.g., the touch sensor IC 953) of the touch circuitry 950 may be formed as part of the display 910 or the DDI 930, or as part of another component (e.g., the auxiliary processor 823) disposed outside the display module 860.

According to an embodiment, the display module 860 may further include at least one sensor (e.g., a fingerprint sensor, an iris sensor, a pressure sensor, or an illuminance sensor) of the sensor module 876 or a control circuit for the at least one sensor. In such a case, the at least one sensor or the control circuit for the at least one sensor may be embedded in one portion of a component (e.g., the display 910, the DDI 930, or the touch circuitry 950)) of the display module 860. For example, when the sensor module 876 embedded in the display module 860 includes a biometric sensor (e.g., a fingerprint sensor), the biometric sensor may obtain biometric information (e.g., a fingerprint image) corresponding to a touch input received via a portion of the display 910. As another example, when the sensor module 876 embedded in the display module 860 includes a pressure sensor, the pressure sensor may obtain pressure information corresponding to a touch input received via a partial or whole area of the display 910. According to an embodiment, the touch sensor 951 or the sensor module 876 may be disposed between pixels in a pixel layer of the display 910, or over or under the pixel layer.

As described above, an electronic device may comprise a processor, a display including a display panel and display driver circuitry, the display driver circuitry including at least one circuit configured to process an image obtained from the processor for displaying on the display panel, a first pad connected to an input node of the at least one circuit, and a second pad connected to the input node, wherein the display further includes a capacitor connected to the input node via the first pad, and power management integrated circuitry (PMIC) including a third pad, a fourth pad, and a power supply circuit respectively connected to the third pad and the fourth pad. According to an embodiment, the PMIC may be configured to provide a first direct current (DC) signal to the at least one circuit via a first path between the first pad and the third pad, using the power supply circuit. According to an embodiment, the PMIC may be configured to identify a voltage value of the first DC signal at the input node via a second path between the second pad and the fourth pad, using the power supply circuit. According to an embodiment, the PMIC may be configured to provide a second DC signal obtained based on the voltage value to the at least one circuit via the first path, using the power supply circuit.

According to an embodiment, the display driver circuitry may include another circuit configured to at least temporarily store the image obtained from the processor, a regulator including a terminal connected to an input node of the another circuit, and a fifth pad connected to another terminal of the regulator. According to an embodiment, the PMIC may include another power supply circuit and a sixth pad connected to the another power supply circuit. According to an embodiment, the PMIC may be configured to provide a third DC signal to the regulator via a third path between the fifth pad and the sixth pad, using the another power supply circuit. According to an embodiment, the third DC signal may be converted to a fourth DC signal via the regulator. According to an embodiment, the fourth DC signal may be provided from the regulator to the another circuit.

According to an embodiment, a voltage value of the third DC signal may be higher than each of the voltage value of the first DC signal and a voltage value of the second DC signal.

According to an embodiment, the display may include another capacitor connected to the input node of the another circuit.

According to an embodiment, the display driver circuitry may include a seventh pad. According to an embodiment, the another capacitor may be connected to the input node of the another circuit via the seventh pad.

According to an embodiment, the display driver circuitry may include another regulator connecting the fifth pad to the input node of the at least one circuit. According to an embodiment, the another regulator may be disabled in at least a portion of a time interval in which each of the first DC signal and the second DC signal is provided. According to an embodiment, the another regulator may be disabled based on connecting the another regulator to a ground. According to an embodiment, the another regulator may be enabled in at least a portion of a time interval in which a kernel is loaded via a bootloader into a random access memory (RAM) of the electronic device. According to an embodiment, the another regulator may be disabled in at least a portion of a time interval being after the kernel is loaded. According to an embodiment, the another regulator may be enabled based on a predetermined voltage value provided to the another regulator. According to an embodiment, the PMIC may be configured to provide the third DC signal via the third path to the another regulator that is enabled based on the predetermined voltage value, using the another power supply circuit. According to an embodiment, the third DC signal may be converted to a fifth DC signal via the another regulator. According to an embodiment, the fifth DC signal may be provided from the another regulator to the at least one circuit.

According to an embodiment, the another regulator may be enabled based on an execution of a predetermined software application.

According to an embodiment, the display driver circuitry may include another circuit configured to at least temporarily store the image provided from the processor and a fifth pad connected to an input node of the another circuit. According to an embodiment, the PMIC may be configured to provide the second DC signal to the another circuit via a third path between the third pad and the fifth pad, using the power supply circuit. According to an embodiment, the display may include another capacitor connected to the input node of the another circuit via the fifth pad.

According to an embodiment, the electronic device may comprise a printed circuit board (PCB), and a connector, attached to the PCB, including a pin connected to the first pad for the first path and another pin connected to the second pad for the second path.

According to an embodiment, the PCB may include a plurality of signal lines comprising a first signal line between the first pad and the pin and a second signal line between the second pad and the another pin. According to an embodiment, the first signal line may be electrically separated from signal lines different from the first signal line from among the plurality of signal lines. According to an embodiment, the second signal line may be electrically separated from signal lines different from the second signal line from among the plurality of signal lines.

According to an embodiment, the display driver circuitry may include another circuit for the first pad and the second pad and a fifth pad connected to the another circuit. According to an embodiment, the PMIC may include another power supply circuit and a sixth pad connected to the another power supply circuit. According to an embodiment, the PMIC may be configured to provide a third DC signal to the another circuit via a third path between the fifth pad and the sixth pad, using the another power supply circuit. According to an embodiment, a voltage value of the third DC signal may be higher than each of the voltage value of the first DC signal and the voltage value of the second DC signal.

According to an embodiment, the electronic device may include an interface between the processor and the display driver circuitry. According to an embodiment, the display driver circuitry may include a regulator including a terminal connected to the input node, and a fifth pad connected to another terminal of the regulator. According to an embodiment, the PMIC may include another power supply circuit and a sixth pad connected to the another power supply circuit. According to an embodiment, the image may be provided from the processor to the display driver circuitry via the interface. According to an embodiment, the processor may be configured to provide a first command to the display driver circuitry via the interface to disable the regulator. According to an embodiment, the processor may be configured to provide a second command to the display driver circuitry via the interface to enable the regulator. According to an embodiment, the PMIC may be configured to provide, to the at least one circuit via the first path, each of the first DC voltage and the second DC voltage, using the power supply circuit, while the regulator is disabled according to the first command. According to an embodiment, the PMIC may be configured to provide a third DC signal to the regulator via a third path between the fifth pad and the sixth pad, using the another power supply circuit, while the regulator is enabled according to the second command. According to an embodiment, the third DC signal may be converted into a fourth DC signal via the regulator. According to an embodiment, the fourth DC signal may be provided from the regulator to the at least one circuit.

According to an embodiment, the processor may be configured to provide the second command to the display driver circuitry via the interface to display an image on the display panel at a brightness level higher than a reference brightness level. According to an embodiment, the processor may be configured to provide the first command to the display driver circuitry via the interface to display an image on the display panel at a brightness level lower than or equal to the reference brightness level.

According to an embodiment, the processor may be configured to provide the second command to the display driver circuitry via the interface to display an image on the display panel based on a driving frequency higher than a reference frequency. According to an embodiment, the processor may be configured to provide the first command to the display driver circuitry via the interface to display an image on the display panel based on a driving frequency lower than or equal to the reference frequency.

According to an embodiment, the display driver circuitry may include another circuit configured to at least temporarily store the image obtained from the processor, another regulator including a terminal connected to an input node of the another circuit, a seventh pad connected to the input node of the another circuit, a node connected to another terminal of the another LOD regulator, an eighth pad connected to the node, and a ninth pad connected to the node. According to an embodiment, the PMIC may include a tenth pad connected to the another power supply circuit. According to an embodiment, the first command may be further used to disable the another regulator. According to an embodiment, the second command may be further used to enable the another regulator. According to an embodiment, the PMIC may be configured to provide the second DC signal to the another circuit via a fourth connection between the third pad and the seventh pad, using the another power supply circuit, while the another regulator is disabled according to the first command. According to an embodiment, the PMIC may be configured to provide a fifth DC signal to the another regulator via a fifth path between the sixth pad and the eighth pad, using the another power supply circuit, while the another regulator is enabled according to the second command. According to an embodiment, the PMIC may be configured to identify a voltage value of the fifth DC signal at the node, via a sixth connection between the ninth pad and the tenth pad, using the another power supply circuit. According to an embodiment, the PMIC may be configured to provide, to the another circuit through the fifth path, the third DC signal obtained based on the voltage value of the fifth DC signal, using the another power supply circuit. According to an embodiment, the fifth DC signal may be converted into a sixth DC signal via the another regulator. According to an embodiment, the sixth DC signal may be provided from the another regulator to the another circuit.

The technical problems to be achieved in this document are not limited to those described above, and other technical problems not mentioned herein will be clearly understood by those having ordinary knowledge in the art to which the present disclosure belongs, from the following description.

The effects that can be obtained from the present disclosure are not limited to those described above, and any other effects not mentioned herein will be clearly understood by those having ordinary knowledge in the art to which the present disclosure belongs, from the following description.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 840) including one or more instructions that are stored in a storage medium (e.g., internal memory 836 or external memory 838) that is readable by a machine (e.g., the electronic device 801). For example, a processor (e.g., the processor 820) of the machine (e.g., the electronic device 801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a processor;
a display including a display panel and display driver circuitry, the display driver circuitry including:
at least one circuit configured to process an image obtained from the processor for displaying on the display panel,
a first pad connected to an input node of the at least one circuit, and
a second pad connected to the input node, wherein the display further includes a capacitor connected to the input node via the first pad; and
power management integrated circuitry (PMIC) including a third pad, a fourth pad, and a power supply circuit respectively connected to the third pad and the fourth pad, the PMIC configured to:
provide a first direct current (DC) signal to the at least one circuit via a first path between the first pad and the third pad, using the power supply circuit;
identify a voltage value of the first DC signal at the input node via a second path between the second pad and the fourth pad, using the power supply circuit; and
provide a second DC signal obtained based on the voltage value to the at least one circuit via the first path, using the power supply circuit.

2. The electronic device of claim 1, wherein the display driver circuitry further includes:
another circuit configured to at least temporarily store the image obtained from the processor;
a regulator including a terminal connected to an input node of the another circuit; and
a fifth pad connected to another terminal of the regulator,
wherein the PMIC further includes another power supply circuit and a sixth pad connected to the another power supply circuit
wherein the PMIC is further configured to provide a third DC signal to the regulator via a third path between the fifth pad and the sixth pad, using the another power supply circuit
wherein the third DC signal is converted to a fourth DC signal via the regulator, and
wherein the fourth DC signal is provided from the regulator to the another circuit.

3. The electronic device of claim 2, wherein a voltage value of the third DC signal is higher than each of the voltage value of the first DC signal and a voltage value of the second DC signal.

4. The electronic device of claim 2, wherein the display further includes another capacitor connected to the input node of the another circuit.

5. The electronic device of claim 4, wherein the display driver circuitry further includes a seventh pad, and
wherein the another capacitor is connected to the input node of the another circuit via the seventh pad.

6. The electronic device of claim 2, wherein the display driver circuitry includes another regulator connecting the fifth pad to the input node of the at least one circuit, and
wherein the another regulator is disabled in at least a portion of a time interval in which each of the first DC signal and the second DC signal is provided.

7. The electronic device of claim 6, wherein the another regulator is disabled based on connecting the another regulator to a ground.

8. The electronic device of claim 6, wherein the another regulator is enabled in at least a portion of a time interval in which a kernel is loaded via a bootloader into a random access memory (RAM) of the electronic device, and is disabled in at least a portion of a time interval being after the kernel is loaded.

9. The electronic device of claim 6, wherein the another regulator is enabled based on a predetermined voltage value provided to the another regulator.

10. The electronic device of claim 9, wherein the PMIC is configured to provide the third DC signal via the third path to the another regulator that is enabled based on the predetermined voltage value, using the another power supply circuit,
wherein the third DC signal is converted to a fifth DC signal via the another regulator, and
wherein the fifth DC signal is provided from the another regulator to the at least one circuit.

11. The electronic device of claim 6, wherein the another regulator is enabled based on an execution of a predetermined software application.

12. The electronic device of claim 1, wherein the display driver circuitry further includes another circuit configured to at least temporarily store the image provided from the processor and a fifth pad connected to an input node of the another circuit, and
wherein the PMIC is further configured to provide the second DC signal to the another circuit via a third path between the third pad and the fifth pad, using the power supply circuit.

13. The electronic device of claim 12, wherein the display further includes another capacitor connected to the input node of the another circuit via the fifth pad.

14. The electronic device of claim 1, further comprising:
a printed circuit board (PCB), and
a connector, attached to the PCB, including a pin connected to the first pad for the first path and another pin connected to the second pad for the second path.

15. The electronic device of claim 14, wherein the PCB includes a plurality of signal lines comprising a first signal line between the first pad and the pin and a second signal line between the second pad and the another pin,
wherein the first signal line is electrically separated from signal lines different from the first signal line from among the plurality of signal lines, and
wherein the second signal line is electrically separated from signal lines different from the second signal line from among the plurality of signal lines.
